# EUROPÄISCHE PATENTSCHRIFT

(11) **EP 0 573 876 B1**
(45) Veröffentlichungstag und Bekanntmachung des Hinweises auf die Patenterteilung: **18.10.2000**
(21) Anmeldenummer: 93108769.6
(22) Anmeldetag: 01.06.1993
(51) Int. Cl.: A23P 1/04, A23K 1/16, A23P 1/02, A23P 1/06, B01J 2/16, B01J 2/30

(54) **Verfahren zur Herstellung von Cholinchlorid enthaltenden Pulvern, diese Pulver und ihre Verwendung**
Process for producing choline chloride containing powders, powders obtained and their use
Procédé pour la fabrication de poudres contenants de la chloride de choline, poudres obtenues et leur application

(30) Priorität: 06.06.1992 DE 4218768
(43) Veröffentlichungstag der Anmeldung: 15.12.1993
(73) Patentinhaber: BASF Aktiengesellschaft, 67063 Ludwigshafen (DE)
(72) Erfinder: Kiefer, Hans, Dr., W-6730 Neustadt (DE); Betz, Roland, Dr., W-6701 Niederkirchen (DE); Bewert, Wolfgang, Dr., W-6710 Frankenthal (DE)

(56) Entgegenhaltungen:
- DE-A- 1 932 536
- DE-A- 2 554 032
- FR-A- 2 151 076
- FR-A- 2 174 170
- GB-A- 1 161 970
- GB-A- 1 168 444
- DATABASE WPI Week 8047, Derwent Publications Ltd., London, GB; AN 80-84049 & SU-A-727 628 (AS UKR TECH HEAT) 16. April 1980
- PATENT ABSTRACTS OF JAPAN vol. 011, no. 075 (C-408) 6. März 1987 & JP-A-61 230 729 (FUJI PAUDARU KK) 15. Oktober 1986 & DATABASE WPI Week 8648, Derwent Publications Ltd., London, GB; AN 86-314129 & JP-A-61 230 729 (FUJI POWDER KK) 15. Oktober 1986
- DATABASE WPI Week 8609, Derwent Publications Ltd., London, GB; AN 86-061191 & SU-A-1 172 920 (AS UKR THERMOPHYS) 15. August 1985
- PATENT ABSTRACTS OF JAPAN vol. 013, no. 095 (C-573) 6. März 1989 & JP-A-63 274 445 (CHUO KAKOKI KK) 11. November 1988

## Beschreibung

Cholinchlorid wird in großen Mengen als Futterzusatz zur Aufzucht und bei der Mästung von Schweinen und Geflügel benötigt.

Die reine Substanz stellt jedoch ein extrem hygroskopisches Pulver dar. Durch Kristallisation aus organischen Lösungsmitteln oder durch Eindampfen gewonnene, wasserfreie Proben zerfließen demzufolge beim Stehen in Umgebungsluft bereits innerhalb weniger Stunden.

Wasserfreies Cholinchlorid kann aufgrund dieser Eigenschaft nicht unmittelbar in den sogenannten Prämixen oder direkt in den Futtermitteln eingesetzt werden, weil diese beim Kontakt mit Umgebungsluft verklumpen und nicht mehr in der geforderten frei fließenden Form vorliegen.

Nach dem Stand der Technik wird dieses Problem auf zwei unterschiedliche Weisen gelöst.

Bei der ersten Variante wird die bei der Synthese üblicherweise anfallende meist 75- bis 78 %ige Lösung von Cholinchlorid auf einen saugfähigen anorganischen Träger augesprüht. Für diesen Zweck hat sich beispielsweise feinverteilte Kieselsäure (SIPERNAT® S22 von Degussa) bewährt. Man nutzt hierbei das Adsorptionsvermögen nicht vollständig aus, so daß beim Stehen an der Luft das Adsorbat nicht schon in kurzer Zeit durch Aufanahme von Luftfeuchtigkeit verklebt und verklumpt. Am Markt wird daher rieselfähiges Adsorbat mit einem Gehalt an Cholinchlorid von 50 % angeboten.

Bei der zweiten technischen Lösung setzt man als Trägerstoff einen sogenannten Naturträger, wie Weizengrießkleine oder Maisspindelmehl, ein. Da diese organischen Trägerstoffe jedoch ein viel geringeres Adsorptionsvermögen im Vergleich mit feinverteilter Kieselsäure besitzen, erhält man nur dann rieselfähige Trockenprodukte, wenn die Adsorption unter Trocknungsbedingungen durchgeführt wird. Dazu wird der organische Trägerstoff mit nur geringen Mengen an Cholinchlorid-Lösung getränkt und anschließend getrocknet. Um ein 50 %iges Produkt auf diese Weise zu erhalten, muß der Tränk- und Trocknungsprozeß bei absatzweiser Ausgestaltung des Verfahrens mindestens 10 bis 15 mal wiederholt werden.

Sowohl die Adsorbate auf anorganischen Trägern als auch die Trockenprodukte auf Basis Naturträger besitzen jedoch entscheidende Nachteile:

Im Kontakt mit feuchter Luft oder mit feuchten Produkten wie Futtermitteln (Wassergehalt von Futterweizen z.B. 10 bis 14 %) oder in Prämixen, die üblicherweise Spurenelemente in Form von kristallwasserhaltigen Salzen enthalten, nehmen beide Produkte sehr schnell Wasser auf. Sie verkleben oder verklumpen, so daß die Lagerung und die erforderliche Dosierung sehr erschwert oder sogar unmöglich gemacht wird.

In FR 2.151.076 wird ein Verfahren zur Verbesserung der Hygroskopizität und der freien Fließbarkeit von hygroskopischen testen Materialien beschrieben. Durch Adsorption von Metallsalzen höherer Fettsäuren auf feste Partikel des hygroskopischen Materials wird diese Verbesserung erreicht. Von Nachteil bei diesem Verfahren ist, daß für die Adsorption getrocknete Substanzen verwendet werden müssen.

Es bestand daher die Aufgabe ein Verfahren vorzuschlagen, das gestattet, beständige, trockene, freifließende Cholinchlorid-Pulver mit einem hohen Gehalt an Cholinchlorid herzustellen, ohne daß die geschilderten Nachteile in Kauf genommen werden müssen.

Diese Aufgabe wurde erfindungsgemäß gelöst mit einem Verfahren zur Herstellung von trockenen, freifließenden, Cholinchlorid enthaltenden Pulvern durch Zerstäuben einer wäßrigen Cholinchloridlösung und gegebenenfalls Auffangen der versprühten Teilchen in einem Fließbett, indem man eine kolloidfreie wäßrige Cholinchloridlösung, in einen entgegenströmenden Luftstrom zerstäubt, der feindispergiert ein hydrophobes Sprühhilfsmittel in solchen Mengen zudosiert enthält, daß die versprühten Cholinchloridtröpfchen mit 2 bis 15 Gew.-%, bezogen auf Cholinchlorid berechnet 100 %, umhüllt werden und die umhüllten Teilchen, falls erforderlich, in einem Fließbett auffängt und im Gasstrom trocknet.

Dabei ist es überraschend, daß es durch diese einfachen Maßnahmen gelingt, Cholinchlorid enthaltende Mikrogranulate herzustellen, die selbst bis zu einem Cholinchloridgehalt von 97 % trocken und freifließend bleiben.

Als hydrophobe Sprühhilfsmittel kommen an sich in der Lebensmittel- und Futtermittelindustrie bekannte und zugelassene Stoffe in Betracht, wie Metallsalze der mittleren bis höheren Fettsäuren mit 12 bis 20 C-Atomen, Ca-Stearat oder auch hydrophobierte Stärken. Bevorzugt werden als hydrophobes Sprühhilfsmittel silanisierte Kieselsäuren verwendet, wie sie in "Die Mühle und Mischfuttertechnik" 114, 3, (1977) beschrieben sind. Insbesondere ist SIPERNAT® D17, von Degussa, Frankfurt zu nennen.

Das hydrophobe Sprühhilfsmittel wird in der Regel in Mengen von 1 bis 15 Gew.-%, insbesondere 2 bis 8 Gew.-%, bezogen auf Cholinchlorid ber. 100 %ig angewandt. Es ist auch möglich, zusätzliche, nichthydrophobe Sprühhilfsmittel mitzuverwenden, obgleich dies keine Vorteile bringt.

Die als Ausgangsmaterial zu verwendende wäßrige Cholinchloridlösung wird zweckmäßig, wie bei der Synthese erhalten, verwendet. Sie ist 50 bis 90 %ig, in der Regel 60 bis 80 %ig. Andere Konzentrationen des Cholinchlorid sind jedoch ebenfalls für das neue Verfahren anwendbar.

Zur Durchführung des neuen Verfahrens ist es lediglich erforderlich, die bei der Synthese anfallende Cholinchlorid-Lösung in einer Sprühkammer, vorzugsweise einem Sprühturm, zu zerstäuben und die mit dem hydrophoben Sprühhilfsmittel umhüllten Tröpfchen in einem Fließbett durch Begasen z.B. mit erwärmter Luft zu trocknen.

Im einzelnen geht man so vor, daß die wäßrige Cholinchloridlösung in dem Sprühturm mit einem Zerstäubungsaggregat zerstäubt wird, wobei Luft, gegebenenfalls erhitzt bis auf Temperaturen von 50°C der zerstäubten Cholinchloridlösung entgegenströmt, wobei das Sprühhilfsmittel in dieser Luft dispergiert wird.

Die Zufuhr des hydrophoben Sprühhilfsmittel oder von Gemischen verschiedener Sprühhilfsmittel erfolgt zusammen mit einem Teil der Luft, wobei die mit dem Hilfsmittel beladene Luft zweckmäßig in den Sprühturm oberhalb des Zerstäubungsaggregates, zweckmäßig in tangentialer Strömung eingeleitet wird. Durch das direkte Einbringen in die Sprühzone wird die mechanische Beanspruchung der Partikel weitgehend vermieden. Der während des Sprühens erzeugte hydrophobe Überzug des Sprühhilfsmittels auf den zerstäubten Teilchen stabilisiert die Partikel soweit, daß ein Zusammenlaufen der Partikel verhindert und die anschließende Trocknung in einem Wirbelbett möglich ist.

Diese Trocknung erfolgt zweckmäßig in einer getrennten Trockenzone in der im Fließbett das in den umhüllten Tröpfchen noch vorhandene Wasser entfernt wird.

Es ist jedoch prinzipiell auch möglich, durch die Wahl der Luftmenge und deren erhöhte Temperatur bereits im Sprühturm einen großen Teil oder sogar alles Wasser bis auf einen im Produkt verbleibenden Restgehalt von 0,5 bis 1 % zu entfernen. In letzterem Fall wählt man als Eingangstemperatur für das Gas bevorzugt Temperaturen über 140°C. Ferner bedarf es zur Herstellung weitgehend von Wasser befreiter Produkte einer ausreichend langen Verweilzeit der zu trocknenden Partikel im Sprühturm. Daher verwendet man bevorzugt lange, schlanke Sprühtürme, wobei im großtechnischen Maßstab bevorzugt Türme mit einer Länge von 20 bis 30 m eingesetzt werden. Überschüssiges Sprühhilfsmittel wird aus dem Trocknungsgasstrom mittels eines Zyklons oder Filters abgeschieden und in den Sprühturm zurückgeführt.

Allgemein wird die Temperatur der der zerstäubten Lösung entgegenströmenden Luft in der Regel im Bereich von 20 bis 170°C gehalten.

Die zu zerstäubende Cholinchloridlösung wird zweckmäßig vor dem Zerstäuben auf Temperaturen von 20 bis 50°C erwärmt; sie kann jedoch gleichermaßen bei Raumtemperatur zerstäubt werden.

Die Ausbildung des Zerstäubungsaggregates hat keinen entscheidenden Einfluß auf das Produkt. So kann die Zerteilung der Cholinchlorid-Lösung beispielsweise durch Düsen oder schnell rotierende Zerstäuberscheiben erfolgen.

Mit dem neuen Verfahren werden trockene, freifließende Pulver in der Regel mit einer Teilchengröße von 150 bis 300 mµ erhalten, die sich von Produkten der vorbekannten Verfahren durch folgende Eigenschaften unterscheiden:
1. Höhere Cholinchloridkonzentration von bis zu 97 Gew.-% sind möglich.
2. Höhere Stabilität in Bezug auf Wasseraufnahme und Verklumpung auch unter ungünstigen Bedingungen.
3. Freifließendes, feinteiliges Pulver, das sich ausgezeichnet im Futtermittel gleichmäßig verteilen läßt und dennoch nicht so fein ist, daß es bei der Produktion und Verarbeitung staubt.

Obgleich es mit dem erfindungsgemäßen Verfahren auf einfache Weise gelingt, Cholinchloridpulver mit hohem Cholinchloridgehalt herzustellen, können auch, falls erwünscht, die handelsüblichen Konzentrationen mit z.B. 50 % Cholinchlorid im Pulver durch Mitverwendung weiterer inerter Zuschlagstoffe eingestellt werden.

Dazu wird z.B. ein inerter Zuschlagstoff, wie Calciumcarbonat in der Cholinchloridlösung dispergiert und diese Dispersion mit dem erfindungsgemäßen Verfahren versprüht. Je nach Menge des Zuschlagstoffes lassen sich so beliebige Konzentrationen des Cholinchlorids im fertigen Pulver einstellen.

Aus dem EP 74 050 ist schon die Herstellung von Trockenpulvern vor allem von öllöslichen Vitaminen bekannt, wonach eine Kolloiddispersion des Vitamins zerstäubt und die Teilchen mit hydrophoben Sprühhilfsmitteln in Kontakt gebracht werden und anschließend die Teilchen in einem Fließbett aufgefangen und getrocknet werden.

Obgleich die Verfahrensmaßnahmen bei dem Verfahren des genannten Patents und beim vorliegenden Verfahren sehr ähnlich sind, ist jedoch Aufgabenstellung und Lösungsansatz gänzlich verschieden.

Während bei der Verpulverung von Vitaminen eine Umhüllung mit einem Kolloid das Ziel ist und das hydrophobe Sprühhilfsmittel lediglich dazu dient, daß die Kolloidteilchen auf ihrem Weg zum Fließbett, in dem sie getrocknet werden, nicht verkleben, der Schutz des Vitamins gegen den Sauerstoffangriff aus der Luft aber durch die Kolloidhülle erfolgt, ist im vorliegenden Fall der Schutz des extrem hygroskopischen Cholinchlorids gegen die Luftfeuchtigkeit durch die relativ kleine Menge des hydrophoben Sprühhilfsmittels gewährleistet, obgleich hier keine zusammenhängende gasdichte Hülle wie etwa bei einem Kolloidüberzug vorliegend kann. Es ist deshalb überraschend, daß der gewünschte Effekt in der Tat eintrat, selbst bei 95 %igem Pulver.

### Beispiel 1

500 g wäßrige Cholinchloridlösung mit einem Gehalt von 75 Gew.-% wurden bei einer Temperatur von 23°C mit einer Einstoffdüse bei 5 bar in einem Sprühturm in eine Wolke, bestehend aus Luft, die mit hydrophober Kieselsäure (SIPERNAT®D17, DEGUSSA) beladen war, versprüht. Das hierbei erhaltene, noch feuchte Produkt wurde auf einem Wirbelschichttrockner bei 70 bis 80°C im Luftstrom auf eine Restfeuchte von 1,0 Gew.-% getrocknet. Gleichzeitig wurde die überschüssige Kieselsäure abgetrennt. Der SiO₂-Gehalt des erhaltenen Pulvers wurde zu 2,7 Gew.-% bestimmt; die Gesamtausbeute betrug 360 g eines Produkts mit einem Wirkstoff gehalt von 95,8 Gew.-%.

### Beispiel 2

Wie in Beispiel 1 beschrieben wurde ein Gemisch, bestehend aus 560 g einer 70 gew.-%igen wäßrigen Cholinchlorid-Lösung und 137 g Maisstärke bei 40°C in eine Wolke aus hydrophober Kieselsäure versprüht. Das erhaltene Produkt wurde bei 80°C auf einem Wirbeltrockner auf einen Restfeuchtegehalt von 1,3 Gew.-% getrocknet. Der SiO₂-Anteil des erhaltenen Pulvers betrug 4,0 Gew.-%, die Gesamtausbeute ergab 485 g bei einem Wirkstoffgehalt von 72,0 %.

## Patentansprüche

1. Verfahren zur Herstellung von trockenen, freifließenden, Cholinchlorid enthaltenden Pulvern durch Zerstäuben einer wäßrigen Cholinchloridlösung und gegebenenfalls Auffangen der versprühten Teilchen in einem Fließbett, dadurch gekennzeichnet, daß man eine kolloidfreie wäßrige Cholinchloridlösung, in einen entgegenströmenden Luftstrom zerstäubt, der feindispergiert ein hydrophobes Sprühhilfsmittel in solchen Mengen zudosiert enthält, daß die versprühten Cholinchloridtröpfchen mit 2 bis 15 Gew.-%, bezogen auf Cholinchlorid berechnet 100 % umhüllt werden und die umhüllten Teilchen, falls erforderlich, in einem Fließbett auffängt und im Gasstrom trocknet.

2. Verfahren gemäß Anspruch 1, dadurch gekennzeichnet, daß man als hydrophobe Sprühhilfsmittel silanisierte Kieselsäuren oder Salze von mittleren bis längeren Fettsäuren verwendet.

3. Verfahren nach Anspruch 1, dadurch gekennzeichnet, daß man eine 50 bis 90%ige wäßrige Cholinchloridlösung verwendet.

4. Verfahren gemäß Anspruch 1, daß man das hydrophobe Sprühhilfsmittel oberhalb der Zerstäubung der Cholinchloridlösung dem Sprühturm zuführt.

5. Freifließendes, Cholinchlorid enthaltendes kolloidfreies Pulver mit einem Gehalt von 50 bis 97 Gew.-%, bezogen auf das Pulver an Cholinchlorid und 3 bis 15 Gew.-%, bezogen auf das Cholinchlorid, an hydrophoben Sprühhilfsmittel ausgewählt aus der Gruppe hydrophobierter Stärke oder silanisierter Kieselsäuren und gegebenenfalls einem inerten Zuschlagstoff.

6. Freifließendes Cholinchlorid enthaltende Pulver gemäß Anspruch 5, dadurch gekennzeichnet, daß das hydrophobe Sprühhilfsmittel silanisierte Kieselsäure ist.

7. Verwendung von freifließenden Cholinchlorid enthaltenden Pulvern gemäß Anspruch 5 als Zusatz zu Futtermitteln.

## Claims

1. A process for preparing dry, free-flowing, choline chloride-containing powders by atomizing an aqueous choline chloride solution and if desired collecting the sprayed particles in a fluidized bed, wherein a colloid-free aqueous choline chloride solution is atomized in a countercurrent-flowing air stream that contains, finely dispersed, a hydrophobic spraying auxiliary metered in in such amounts that the sprayed choline chloride droplets are coated with 2 to 15% by weight of spraying auxiliary, based on choline chloride calculated as 100%, and the coated particles are, if desired, collected in a fluidized bed and dried in the gas stream.

2. A process as claimed in claim 1, wherein the hydrophobic spraying auxiliary used is a silanized silicic acid or a salt of a medium to relatively long chain fatty acid.

3. A process as claimed in claim 1, wherein a 50 to 90% aqueous choline chloride solution is used.

4. A process as claimed in claim 1, wherein the hydrophobic spraying auxiliary is introduced into the spray tower above the atomization of the choline chloride solution.

5. A free-flowing, choline chloride-containing colloid-free powder with a content of 50 to 97% by weight, based on the powder, of choline chloride and 3 to 15% by weight, based on the choline chloride, of hydrophobic spraying auxiliary selected from the group consisting of hydrophobized starch and silanized silicic acids, and with or without an inert bulking agent.

6. A free-flowing choline chloride-containing powder as claimed in claim 5, wherein the hydrophobic spraying auxiliary is silanized silicic acid.

7. A method of using free-flowing choline chloride-containing powders as claimed in claim 5 as an additive to animal feeds.

## Revendications

1. Procédé pour la préparation de poudres sèches, s'écoulant librement, contenant du chlorure de choline, par pulvérisation d'une solution aqueuse de chlorure de choline et éventuellement recueil des particules pulvérisées dans un lit fluidisé, caractérisé par le fait qu'on pulvérise une solution aqueuse de chlorure de choline exempte de colloïdes, dans un courant d'air à contre-courant, qui contient sous forme finement dispersée un adjuvant de pulvérisation hydrophobe ajouté en une quantité telle que les gouttelettes de chlorure de choline pulvérisées sont enrobées avec 2 à 15% en poids, par rapport au chlorure de choline compté pour 100%, et que les particules enrobées, si nécessaire, sont emprisonnées dans un lit fluidisé et séchées dans le courant gazeux.

2. Procédé selon la revendication 1, caractérisé par le fait qu'on utilise comme adjuvant de pulvérisation hydrophobe des acides siliciques silanés ou des sels d'acides gras moyens ou supérieurs.

3. Procédé selon la revendication 1, caractérisé par le fait qu'on utilise une solution aqueuse à 50 à 90% de chlorure de choline.

4. Procédé selon la revendication 1, caractérisé par le fait qu'on introduit l'adjuvant de pulvérisation hydrophobe au-dessus de la pulvérisation de la solution de chlorure de choline dans la tour de pulvérisation.

5. Poudre à écoulement libre, exempte de colloïde, contenant du chlorure de choline, ayant une teneur de 50 à 97% en poids, par rapport à la poudre, de chlorure de choline, et 3 à 15% en poids, par rapport au chlorure de choline, d'adjuvant de pulvérisation hydrophobe choisi dans le groupe de l'amidon rendu hydrophobe ou des acides siliciques silanés et éventuellement une charge inerte.

6. Poudre à écoulement libre, contenant du chlorure de choline, caractérisée par le fait que l'adjuvant de pulvérisation hydrophobe est de l'acide silicique silané.

7. Utilisation de poudres contenant du chlorure de choline à écoulement libre selon la revendication 5 comme additif à des aliments pour animaux.
